# EUROPÄISCHE PATENTSCHRIFT

(11) **EP 3 209 951 B1**
(45) Veröffentlichungstag und Bekanntmachung des Hinweises auf die Patenterteilung: **13.02.2019**
(21) Anmeldenummer: 15784032.3
(22) Anmeldetag: 21.10.2015
(51) Int. Cl.: F24S 40/52, F24S 50/80, F24S 10/50, F24S 20/66

(54) **SONNENKOLLEKTOR ZUR WÄRMEENERGIEGEWINNUNG AUS SONNENLICHT**
SOLAR COLLECTOR FOR OBTAINING THERMAL ENERGY FROM SUNLIGHT
CAPTEUR SOLAIRE POUR LA RÉCUPÉRATION D'ÉNERGIE THERMIQUE À PARTIR DE LA LUMIÈRE SOLAIRE

(30) Priorität: 22.10.2014 DE 102014221448
(43) Veröffentlichungstag der Anmeldung: 30.08.2017
(73) Patentinhaber: Fraunhofer-Gesellschaft zur Förderung der angewandten Forschung e.V., 80686 München (DE)
(72) Erfinder: MAURER, Christoph, 79106 Freiburg (DE)
(74) Vertreter: Friese Goeden Patentanwälte PartGmbB
(86) Internationale Anmeldenummer: PCT/EP2015/074351
(87) Internationale Veröffentlichungsnummer: WO 2016/062760

(56) Entgegenhaltungen:
- CN-Y- 2 663 873
- DE-A1- 2 840 024
- DE-U1-202005 005 631
- FR-A1- 2 238 833
- US-A- 3 972 316
- US-A- 4 112 918

## Beschreibung

Die Erfindung betrifft einen Sonnenkollektor zur Wärmeenergiegewinnung aus Sonnenlicht, mit einer beweglichen Absorptionsvorrichtung, die eine Sonnenlicht aussetzbare Absorptionsfläche hat, und zwei im Abstand voneinander angeordneten, Materialschichten, von denen wenigstens eine transparent oder transluzent ist, und die zwischen sich einen Raumbereich einschließen, in den bzw. aus dem die Absorptionsvorrichtung bewegbar ist, wobei die Absorptionsvorrichtung mittels auf ihre Absorptionsfläche fallendes Sonnenlicht erwärmbar ist und von der Absorptionsvorrichtung aufgenommene Wärme an ein Wärmeträgerfluid übertragbar ist, das aus dem Sonnenkollektor abführbar ist.

Ein solcher Sonnenkollektor ist aus der DE 10 2011 085 502 A1 bekannt. Bei diesem Sonnenkollektor, der auch zur Beschattung von Gebäuderäumen verwendbar ist, besteht die Absorptionsvorrichtung aus einer Mehrzahl von beabstandeten Lamellen, welche in Führungsschienen mittels zugeordneter Befestigungsvorrichtungen gehalten sind. Die Lamellen können um die Längsachse verschwenkt und in den Führungsschienen senkrecht zu der Längsachse der Lamellen verschoben werden, so dass die Absorption von Solarwärme je nach Wärmebedarf variiert oder ganz unterbunden werden kann. Jede Lamelle ist über eine Heat-Pipe und einen Kondensatoradapter mit einem Wärmetauscher verbinden, der in ein Wärmetauschergehäuse eingesetzt ist, das einen Fluidraum aufweist, durch den ein Wärmeträgerfluid zirkuliert. Das Wärmeträgerfluid transportiert die von den Lamellen aufgenommene und über die Heat-Pipe, den Kondensatoradapter und den Wärmetauscher auf das Wärmeträgerfluid übertragene Wärme zum Ort der Verwendung, der eine Heizungsanlage für Gebäude oder eine Trocknungsanlage für zu trocknendes Gut sein kann. Ein derartiger Sonnenkollektor ist im Aufbau kompliziert.

Aus der DE 28 400 24 ist eine im Innenraum eines Gebäudes angeordnete, flächenförmige Sonnenschutzeinrichtung bekannt, welche zur Beschattung eines Fensters dient. Die Sonnenschutzeinrichtung ist zur Sonnenenergiegewinnung verwendbar, indem diese auf der Sonneneinstrahlungsseite lichtstrahlungsenergieabsorbierend ausgebildet und so angeordnet ist, dass die sich an der Sonnenschutzeinrichtung entwickelnde Wärmeenergie durch Konvektionsströmungen oder durch Zwangsbelüftung abführen lässt.

Die DE 20 2005 005 631 U1 zeigt einen Sonnenkollektor zur Umwandlung von Sonnenstrahlung in Wärme, mit einem Gehäuse mit einem sonnenstrahlungsdurchlässigen Fenster und einem in dem Gehäuse hinter dem Fenster angeordneten Sonnenstrahlungsabsorber. Weiterhin ist eine Wärmetauschereinrichtung zur Abfuhr der Wärme aus dem Gehäuse thermisch mit dem Absorber gekoppelt. Durch eine im Gehäuse angeordnete Abschatteinrichtung lässt sich der Absorber zumindest teilweise abschatten.

Die Aufgabe der Erfindung besteht darin, einen Sonnenkollektor der eingangs genannten Art zu schaffen, der einen kostengünstigen Aufbau hat, der auf effiziente Art und Weise Solarwärme absorbiert und auf das Wärmeträgerfluid überträgt und der sich auch zur Beschattung von Gebäuderäumen eignet.

Die Aufgabe der Erfindung wird dadurch gelöst, dass die Absorptionsvorrichtung aus einer die Absorptionsfläche aufweisenden Folien- oder Stoffbahn besteht, der Raumbereich von dem Wärmeträgerfluid durchströmbar ist und wenn das Wärmeträgerfluid den Raumbereich durchströmt und die Folien- oder Stoffbahn in den Raumbereich bewegt ist, das Wärmeträgerfluid an einer oder beiden Seiten der Folien- oder Stoffbahn entlangströmt.

Der erfindungsgemäße Sonnenkollektor hat den Vorteil, dass die Wärmeübertragung von der Absorptionsvorrichtung zu dem Wärmeträgerfluid sehr schnell und nahezu verlustlos stattfindet, da das Wärmeträgerfluid in direktem und großflächigem Kontakt mit der Solarwärme absorbierenden Folien- oder Stoffbahn steht und unmittelbar nach dem Verlassen des Raumbereichs dem Ort der Verwendung der Solarwärme zuführbar ist. Der Wärmeübertragungsweg von der Absorptionsvorrichtung zum Ort der Verwendung der Solarwärme ist deutlich kürzer und damit verlustärmer als bei dem bekannten Sonnenkollektor.

Vorzugsweise ist die Strömung des Wärmeträgerfluids steuerbar derart, dass das Wärmeträgerfluid den Raumbereich durchströmt, wenn die Folien- oder Stoffbahn in den Raumbereich hineinbewegt ist, und den Raumbereich nicht durchströmt, wenn die Folien- oder Stoffbahn aus dem Raumbereich herausbewegt ist.

Die Absorptionsfläche ist vorzugsweise vergrößer- und bis auf Null verkleinerbar, wobei die Folien- oder Stoffbahn eine größere Absorptionsfläche hat, wenn sie in den Raumbereich hineinbewegt ist, und eine kleinere oder keine Absorptionsfläche aufweist, wenn sie aus dem Raumbereich herausbewegt ist. Durch die Veränderbarkeit der Größe der Absorptionsfläche ist es möglich, die SolarWärmeenergiegewinnung bedarfsgerecht zu steuern, zumindest solange Sonnenlicht durch die transparente oder transluzente Schicht in den Raumbereich fällt.

Vorzugsweise schließen die Materialschichten zwischen sich einen weiteren Raumbereich ein, der die Folien- oder Stoffbahn aufnimmt, wenn sie aus dem einen Raumbereich herausbewegt ist und eine verkleinerte oder keine Absorptionsfläche hat. Der weitere Raumbereich kann dabei durch Abdunklung der der Sonne zugewandten Schicht sonnengeschützt sein. Die Verwendung einer flexiblen Folien- oder Stoffbahn als Absorptionsvorrichtung hat den Vorteil, dass die Folien- oder Stoffbahn faltbar oder auf- und ausrollbar ist, derart, dass sich die Folien- oder Stoffbahn entfaltet oder ausrollt, wenn sie in den Raumbereich hineinbewegt wird, und dass sie sich zusammenfaltet oder aufrollt, wenn sie aus dem Raumbereich herausbewegt wird. Vorzugsweise ist die Folien- oder Stoffbahn zusammengefaltet oder aufgerollt, wenn sie sich in dem weiteren Raumbereich befindet. Die Folien- oder Stoffbahn kann damit platzsparend in dem weiteren Raumbereich untergebracht werden, der relativ klein gemacht werden kann.

Die Materialschichten können in einigen Ausführungsformen der Erfindung eine Folienbahn enthalten oder daraus bestehen. In anderen Ausführungsformen der Erfindung können die Materialschichten plattenförmige Schichten aus Glas oder polymeren Kunststoff sein oder solche enthalten, so dass die mechanische Stabilität erhöht ist.

Vorzugsweise schließen die Materialschichten einen im Bereich von 45° und 90° liegenden Winkel mit der Horizontalen ein und kann sich die Folien- oder Stoffbahn unter der Wirkung der Schwerkraft aus dem Raumbereich herausbewegen, wenn das Wärmeträgerfluid ruht. Infolgedessen ist das Risiko einer Überhitzung des Sonnenkollektors bei Stromausfall, durch den eine Zirkulationspumpe für das Wärmeträgerfluid stillgesetzt wird, ausgeschaltet.

Es ist vorteilhaft, wenn die Materialschichten einen im Bereich zwischen 45° und 90° liegenden Winkel mit der Horizontalen einschließen, die Folien- oder Stoffbahn mit einem Strömungswiderstand verbunden ist, an dem das Wärmeträgerfluid eine Kraft erzeugt, die die Folien- oder Stoffbahn in den Raumbereich hineinbewegt, wenn das Wärmeträgerfluid in eine Richtung in Bewegung ist, in der es den Raumbereich durchströmt. Die Folien- oder Stoffbahn wird daher ausgerollt oder entfaltet sich, sobald das Wärmeträgerfluid in Bewegung gesetzt ist, so dass keine zusätzliche Energie zum Entfalten oder Ausrollen der Folien- oder Stoffbahn benötigt wird. Dadurch wird der Kollektor stagnationssicher, d.h. bei Ausfall des kühlenden Stromes des Wärmeträgerfluides bewegt sich die Folien- oder Stoffbahn aus dem Raumbereich heraus, so dass eine Überwärmung und Beschädigung vermieden wird, beispielsweise durch Schmelzen.

Die Folien- oder Stoffbahn kann auch mit einer Feder und/oder einem Seilzug mit Gewicht verbunden sein, die bzw. der an der Folien- oder Stoffbahn eine Kraft erzeugt, die die Folien- oder Stoffbahn aus dem Raumbereich herausbewegt, wenn der Wärmeträgerfluid ruht. Der Einsatz einer Feder und/oder eines Seilzugs mit Gewicht zum Herausbewegen der Folien- oder Stoffbahn aus dem Raumbereich kann alternativ oder zusätzlich zum Einsatz der Schwerkraft zu diesem Zweck vorgesehen sein. Es ist zweckmäßig, wenn ein weiterer Raumbereich neben dem zwischen den beiden Materialschichten eingeschlossenen einen Raumbereich angeordnet ist, der weitere Raumbereich von einer opaken plattenförmigen Schicht abgedeckt ist, die neben der transparenten oder transluzenten Schicht angeordnet ist, die Folien- oder Stoffbahn zwischen dem einen Raumbereich und dem weiteren Raumbereich hin- und herbewegbar ist und von der opaken Schicht vor Bestrahlung mit Sonnenlicht geschützt ist, wenn sie sich in dem weiteren Raumbereich befindet. Die Folien- und Stoffbahn braucht daher nicht zusammengefaltet oder aufgerollt werden und auch flexibel sein, wenn sie sonnengeschützt in dem weiteren Raumbereich untergebracht werden soll, sondern kann vielmehr in ausgestreckter Form in dem weiteren Raumbereich angeordnet werden.

Auch bei einer derartigen Ausführung des Sonnenkollektors kann die Folien- oder Stoffbahn mit einem Strömungswiderstandselement verbunden sein, an dem das Wärmeträgerfluid eine Kraft erzeugt, die die Folien- oder Stoffbahn aus dem weiteren Raumbereich heraus- und in den einen Raumbereich hineinbewegt, wenn das Wärmeträgerfluid in eine Richtung in Bewegung ist, in der es den einen Raumbereich durchströmt. Alternativ oder zusätzlich kann für die Bewegung der Folien- oder Stoffbahn ein Seilzug mit Gewicht dazu verwendet werden, die Folien- oder Stoffbahn aus dem einen Raumbereich heraus- und in den weiteren Raumbereich hinzubewegen.

Vorzugsweise können die beiden Schichten punktuell mittels einer Vielzahl von Verbindungselementen miteinander verbunden sein, und kann die Folien- und Stoffbahn an zwei sich gegenüberliegenden Rändern eine Vielzahl von senkrecht zu diesen Rändern verlaufende Einschnitte haben, die zwischen sich streifenförmige Zungen bilden, wobei wenn die Folien- oder Stoffbahn ausgestreckt im Raumbereich angeordnet ist, an jedem Verbindungselement eine oder mehrere der Zungen umgebogen anliegen. Damit kann die Folien- oder Stoffbahn beliebig weit in den Raumbereich hineinbewegt werden, ohne dass an den Rändern der Folien- oder Stoffbahn Wellen oder Buckel entstehen.

Das Wärmeträgerfluid kann nach dem Verlassen des einen Raumbereichs unter einem Trocknungsgitter vorbeigeleitet werden, auf das zu trocknendes feuchtes Gut aufbringbar ist. Damit eignet sich der Sonnenkollektor für einen kostengünstigen Einsatz beim Trocknen von Agrarprodukten.

Der Sonnenkollektor kann als Gebäudefassadenelement verwendet werden, und er kann auch zum Erwärmen von Trocknungsluft, die zum Trocknen von feuchtem Gut verwendet wird, eingesetzt werden.

Der Sonnenkollektor eignet sich für den Großflächeneinsatz in neuen Gebäuden und bei Renovierungen, sowohl im Wohnungswie auch im Nicht-Wohnungsbau. Beispielsweise können Treppenhäuser von Mehrfamilienhäusern, Bürohäuser und Fassaden von Gewerbebetrieben mit dem Sonnenkollektor ausgestattet werden. Im Bereich der preiswertesten Solarsysteme kann der erfindungsgemäße Sonnenkollektor mit marktbeherrschenden Thermosyphonsystemen konkurrieren, z.B. mit Ost- oder Westausrichtung in äquatornahen Orten. Der erfindungsgemäße Sonnenkollektor hat ein sehr günstiges Preis-Leistungs-Verhältnis. Wird er als Fassadenelement verwendet, vereint er Komfort (visuell und thermisch), Ökologie und Ökonomie deutlich besser als bekannte Sonnenkollektoren. Daher besonders kostengünstig ist, eignet er sich für den Einsatz in Entwicklungsländern, wo er zu einer Reduzierung von CO₂-Emissionen beitragen kann.

Das Wärmeträgerfluid kann z.B. Luft oder eine Wasser-Glykol-Mischung sein. In einer Ausführung ist die sonnenabgewandte Schicht verspiegelt. Dieser Sonnenkollektor ist opak, er ist aber über die Stagnationssicherheit und den Einsatz billiger Materialien preiswerter als bisher verfügbare Kollektoren.

Die Folien- oder Stoffbahn kann mit einer Einrichtung für Photovoltaik ausgestattet sein.

Die Erfindung wird nun anhand einer Beschreibung verschiedener Ausführungsbeispiele und unter Bezugnahme auf die beiliegenden Zeichnungen näher erläutert. Es zeigt:
Figur 1a eine schematische Darstellung eines als Fassadenelement verwendeten Sonnenkollektors mit vier transparenten Scheiben und einer absorbierenden Folie, die zu Boden gesunken ist, weil das Wärmeträgerfluid ruht,
Figur 1b eine schematische Darstellung des gleichen Sonnenkollektors wie in Figur 1a, wobei die absorbierende Folie nach oben ausgestreckt ist, weil das Wärmeträgerfluid nach oben strömt,
Figur 2 eine schematische Darstellung eines Sonnenkollektors in Form einer Stegplatte mit absorbierenden Folien in der Mitte und einem Wärmeträgerfluid zwischen den Folien, den Stegen und den beiden Deckschichten der Stegplatte,
Figur 3 eine schematische Darstellung eines Sonnenkollektors, bei dem das Wärmeträgerfluid nach seinem Austritt aus dem Raumbereich unter einem Trocknungsgitter vorbeigeleitet wird,
Figur 4a eine schematische Darstellung eines ähnlichen Sonnenkollektors wie der in Figur 3 dargestellte Sonnenkollektor, mit einem Seilzug mit einem Gewicht im ausgefahrenen Zustand der absorbierenden Folie,
Figur 4b eine schematische Darstellung des gleichen Sonnenkollektors wie in Figur 4a, wobei jedoch die absorbierende Folie im eingefahrenen Zustand dargestellt ist,
Figur 5 eine Draufsicht auf eine ausgefahrene absorbierende Folie zwischen vier Glaslotpunkten, die die beiden nicht dargestellten transparenten oder transluzenten Schichten, zwischen denen die Folie angeordnet ist, verbinden,
Figur 6 eine schematische Darstellung eines Sonnenkollektors mit einem Seilzug mit einem Gewicht im ausgefahrenen Zustand der absorbierenden Folie,
Figur 7 den in Figur 6 dargestellten Sonnenkollektor im eingefahrenen Zustand der absorbierenden Folie und
Figur 8 eine schematische Darstellung eines Sonnenkollektors in Folienbauweise.

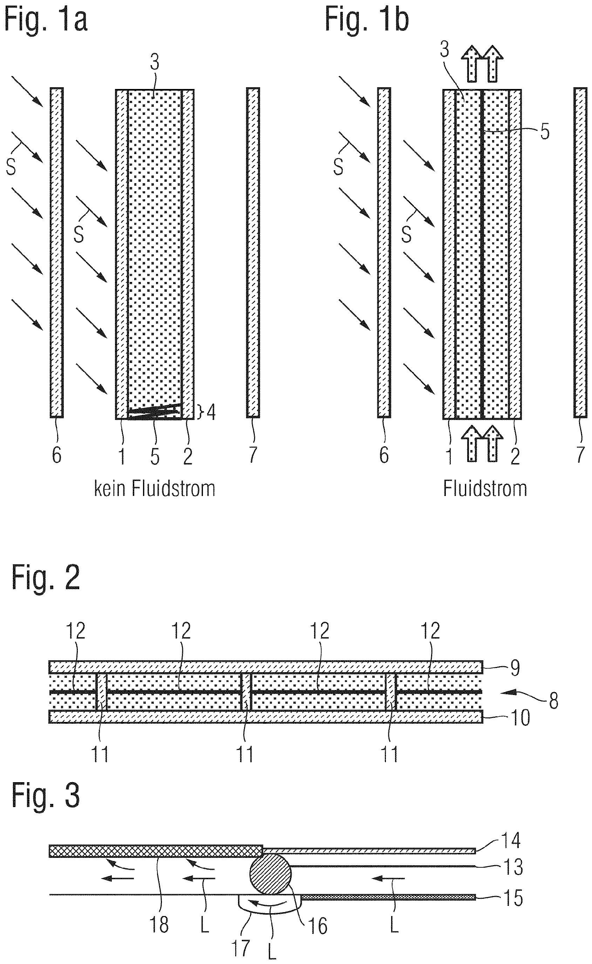

Wie in den Figuren 1a und 1b gezeigt, weist ein als Fassadenelement verwendbarer Sonnenkollektor zwei vertikale, transparente Schichten 1, 2 auf, die in einem horizontalen Abstand voneinander angeordnet und parallel zueinander sind. Die beiden Schichten 1, 2 schließen zwischen sich einen Raumbereich 3 ein, der mit einem Wärmeträgerfluid gefüllt ist. Am unteren Ende des Sonnenkollektors befindet sich ein weiterer Raumbereich 4 zwischen den beiden Schichten 1, 2. In dem weiteren Raumbereich 4 befindet sich eine zickzackförmig gefaltete absorbierende flexible Folienbahn bzw. Folie 5, die im ausgestreckten Zustand, der in Figur 1b dargestellt ist, mittels Sonnenlichts erwärmt wird, das durch eine der beiden Schichten, z.B. Schicht 1 fällt. Das durch die Schicht 1 fallende Sonnenlicht ist durch die schrägen Pfeile in Figur 1a und Figur 1b dargestellt. In dem in Figur 1a dargestellten Zustand des Sonnenkollektors ruht das Wärmeträgerfluid. Bei dem in Figur 1b dargestellten Zustand des Sonnenkollektors strömt das Wärmeträgerfluid von unten nach oben, wie durch die nach oben weisenden Pfeile dargestellt ist. Wenn das Wärmeträgerfluid ruht, sinkt die Folienbahn 5 nach unten unter der Wirkung der Schwerkraft, wobei sie sich zickzackförmig zusammenfaltet. Im ausgestreckten Zustand der Folienbahn 5, wie er in Figur 1b dargestellt ist, strömt das Wärmeträgerfluid auf beiden Seiten der Folienbahn 5 an ihr vorbei. Dabei gibt sie an das Wärmeträgerfluid Wärme ab, die sie aus dem durch die Schicht 1 fallenden Sonnenlicht absorbiert hat. Im ausgestreckten Zustand der Folienbahn, der durch das an ihr vorbeiströmende Wärmeträgerfluid aufrecht erhalten wird, hat die Absorptionsfläche der Folie 5 ein Maximum. Dagegen ist die Absorptionsfläche der Folie 5 auf ein Minimum geschrumpft, wenn die Folie 5, wie in Figur 1a gezeigt, zusammengefaltet in den weiteren Raumbereich 4 am unteren Ende des Sonnenkollektors gesunken ist. Das durch Wärmeübertragung erwärmte Wärmeträgerfluid wird aus dem Sonnenkollektor abgeführt und an den Ort der Verwendung der Wärme geleitet, der eine Heizungsanlage sein kann, mit der Gebäuderäume beheizt und/oder Brauchwasser erhitzt werden kann. Das Absinken der Folie bei ruhendem Wärmeträgerfluid kann durch nicht dargestellte Federn bewirkt, unterstützt oder beschleunigt werden. Die absorbierende Folie 5 kann auch transparent mit einem sehr kleinen Transmissionsgrad gestaltet werden. Als Fassadenelement kann dann der Sonnenkollektor zwischen hoher und niedriger Transparenz schalten. Bei dem in Figur 1a und Figur 1b dargestellten Sonnenkollektor sind eine weitere transparente Schicht 6 zwischen der Schicht 1 und der äußeren Umgebung und eine weitere transparente Schicht 7 zwischen der Schicht 2 und dem Innenraum vorgesehen. Die weiteren Schichten 6, 7 können den solarthermischen Ertrag erhöhen und den U-Wert und den g-Wert des Fassadenelements reduzieren.

Das Ausfahren der absorbierenden Folie 5 aus dem in Figur 1a dargestellten zusammengefalteten Zustand in den in Figur 1b dargestellten ausgestreckten Zustand kann durch ein Strömungswiderstandselement, das mit dem oberen Ende der Folie 5 verbunden ist, aber in den Figuren 1a und 1b nicht dargestellt ist, bewirkt, unterstützt oder beschleunigt werden.

Bei dem in Figur 2 dargestellten Ausführungsbeispiel besteht der Sonnenkollektor aus einer Stegplatte 8, die eine obere Deckschicht 9 und eine untere Deckschicht 10 aufweist, die durch Stege 11 miteinander verbunden sind und auf Abstand gehalten werden. Zwischen jeweils zwei benachbarten Stegen 11 befindet sich eine bewegbare absorbierende Folienbahn bzw. Folie 12, die jeweils in der Mitte zwischen den beiden Schichten 9, 10 angeordnet und flexibel ist. In dem zwischen den beiden Schichten 9, 10 eingeschlossenen Raumbereich, der durch die Stege 11 in mehrere Abschnitte unterteilt ist, befindet sich das Wärmeträgerfluid, das auf beiden Seiten der Folien 12 an ihnen entlangströmen kann. Das beispielsweise durch die obere Schicht 9 fallende Sonnenlicht fällt auf die Absorptionsfläche der Folien 12, wobei diese dabei erwärmt werden. Die absorbierte Wärme geben die Folien 12 an das Wärmeträgerfluid ab, das, wenn es strömt, die Wärme an den Ort der Verwendung abtransportiert. Die Ausbildung des Sonnenkollektors als Stegplatte hat den Vorteil, dass sie beim Nenndruck des Wärmeträgerfluids plan ist und nicht zu einer Verzerrung des Fassadenbildes führen kann. Die in den Zwischenräumen der Stegplatte 8 angeordneten Folienbahnen 12 können wie bei dem in den Figuren 1a und 1b dargestellten Sonnenkollektor durch Faltung eingefahren und wieder ausgestreckt werden. Das Ein- und Ausfahren der Folienbahnen 12 kann auch durch Einrollen bzw. Ausrollen bewirkt werden.

Bei dem in Figur 3 dargestellten Ausführungsbeispiel befindet sich eine absorbierende Folienbahn 13 im ausgestreckten Zustand zwischen einer transluzenten oberen Schicht 14 und einer unteren, weißen Schicht 15. Am in Figur 3 linken Ende der Folienbahn 13 befindet sich ein zylindrisches Strömungswiderstandelement 16 über einem Bypassabschnitt 17. Am in Figur 3 linken Ende der oberen transluzenten Schicht 14 schließt sich ein Trocknungsgitter 18 an, auf dem feuchtes Gut, zum Beispiel Agrarprodukte, zum Trocknen lagerbar ist. Als Wärmeträgerfluid wird Luft L verwendet, die in Figur 3 von rechts nach links in den Raum zwischen der Folienbahn 13 und der unteren weißen Schicht 15 strömt, dann durch den Bypassabschnitt 17 geht und schließlich unterhalb des Trocknungsgitters 18 entlang und nach oben durch das Trocknungsgitter hindurch strömt. Die Strömungsrichtung der Luft L ist durch die Pfeile in Figur 3 angedeutet. Sonnenlicht fällt durch die obere transluzente Schicht 14 und trifft auf die ausgestreckte Folienbahn 13, die dabei erwärmt wird, und die ihrerseits die an ihr vorbeiströmende Luft erwärmt. Der Luftstrom kann z.B. mit einem Ventilator erzeugt werden, der mit Strom aus einer Photovoltaikanlage betrieben wird. Ein Sonnensystem könnte mit sehr preiswerten und wieder verwerteten Materialien besonders in äquatornahen Entwicklungsländern dienlich sein.

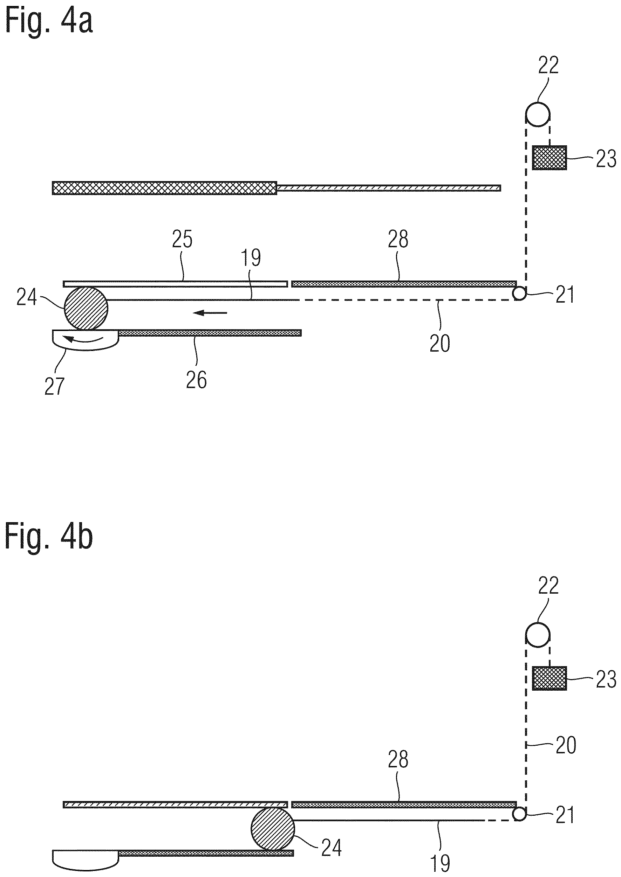

Bei dem in den Figuren 4a und 4b dargestellten Ausführungsbeispiel ist das in Figur 4a und Figur 4b rechte Ende einer Folienbahn 19 mit einem gestrichelt dargestellten Seil 20 verbunden, das über zwei Umlenkrollen 21 und 22 geführt ist und mit einem Gewicht 23 verbunden ist. Am in den Figuren 4a und 4b linken Ende der Folienbahn 19 befindet sich ein Strömungswiderstandselement 24. In Figur 4a ist der Sonnenkollektor in einem Zustand dargestellt, in dem sich die Folienbahn 19 zwischen einer transluzenten Schicht 25 und einer opaken Schicht 26 befindet und in dem das Strömungswiderstandselement 24 über einem Bypassabschnitt 27 ist. In diesem Zustand wird die Folienbahn 19 mittels durch die transluzente Schicht 25 fallende Sonnenlicht erwärmt. Die Folienbahn 19 gibt die Wärme an ein Wärmeträgerfluid, z.B. Luft ab, die in Figur 4a in dem Raum zwischen der Folienbahn 19 und der opaken Schicht 26 von rechts nach links, wie durch den Pfeil angedeutet, und durch den Bypassabschnitt 27 strömt. Mit dieser Luft könnte z.B. das in Figur 3 dargestellte Trocknungsgitter 18 durchströmt werden.

In Figur 4b ist die Folienbahn 19 in einem eingefahrenen Zustand gezeigt, wobei sie sich unterhalb einer opaken Schicht 28 befindet, die die Folienbahn 19 vor Sonneneinstrahlung schützt. Wird die Luft beispielsweise mittels eines Ventilators in Strömung versetzt, zieht das Strömungswiderstandselement 24 die Folienbahn 19 aus dem eingefahrenen Zustand, wie er in Figur 4b dargestellt ist, in den in Figur 4a dargestellten, ausgefahrenen Zustand, wogegen der Seilzug die Folienbahn 19 aus dem ausgefahrenen Zustand in den eingefahrenen Zustand zurückführt, nachdem der Luftstrom abgeschaltet ist. Die in den Figuren 3, 4a und 4b gezeigte Folienbahn 13 bzw. 19 braucht nicht flexibel zu sein. Dagegen ist die bei dem in den Figuren 1a und 1b dargestellten Sonnenkollektor verwendete Folienbahn 5 flexibel. Auch die in Figur 2 dargestellte Folienbahn ist flexibel.

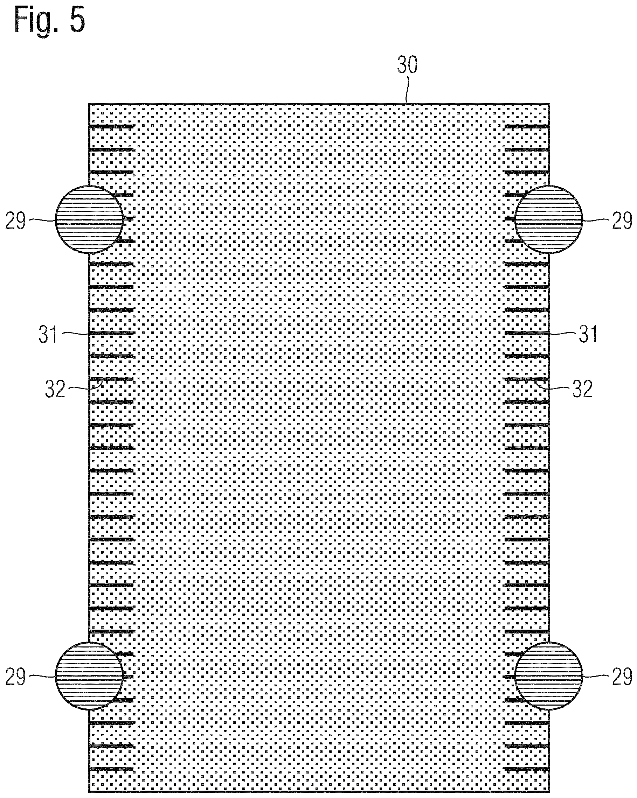

Bei dem in Figur 5 dargestellten Ausführungsbeispiel sind die beiden nicht dargestellten plattenförmigen Schichten durch vier Glaslotpunkte 29 miteinander verbunden. Die zwischen den Glaslotpunkten 29 sich befindende ausgestreckte absorbierende Folienbahn 30 hat an ihren sich gegenüberliegenden vertikalen Rändern 31 eine Vielzahl von horizontalen Einschnitten 32. Die Folienbahn 30 kann damit in verschiedenen Stellungen relativ zu den Glaslotpunkten 29 angeordnet werden, wobei nur die an den Glaslotpunkten 29 anliegenden Zungen, die sich zwischen den Einschnitten 32 ausbilden, umgebogen werden. Anstelle von einer Vielzahl von horizontalen Einschnitten könnte die Folienbahn 30 auch vier Aussparungen haben, die jeweils einen Rand haben, der an einem Glaslotpunkt 29 ohne Falten zu werfen, anliegt.

Alle vorgenannten Folienbahnen können mit Photovoltaik ausgestattet sein.

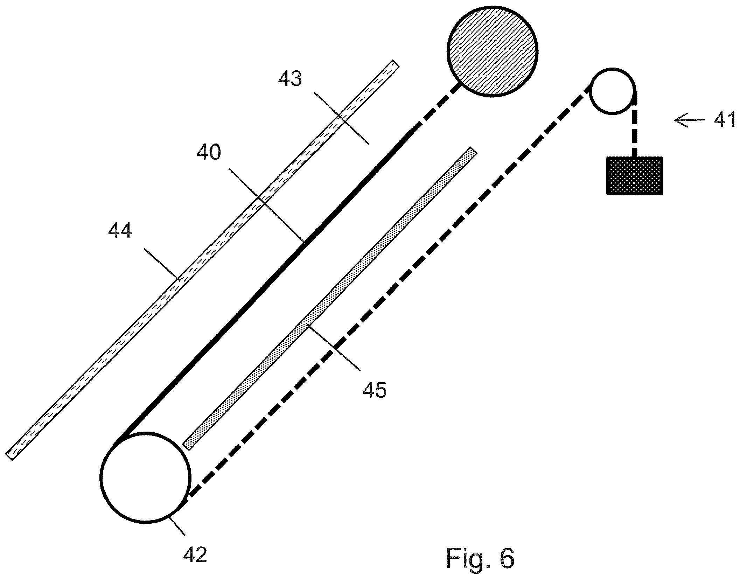

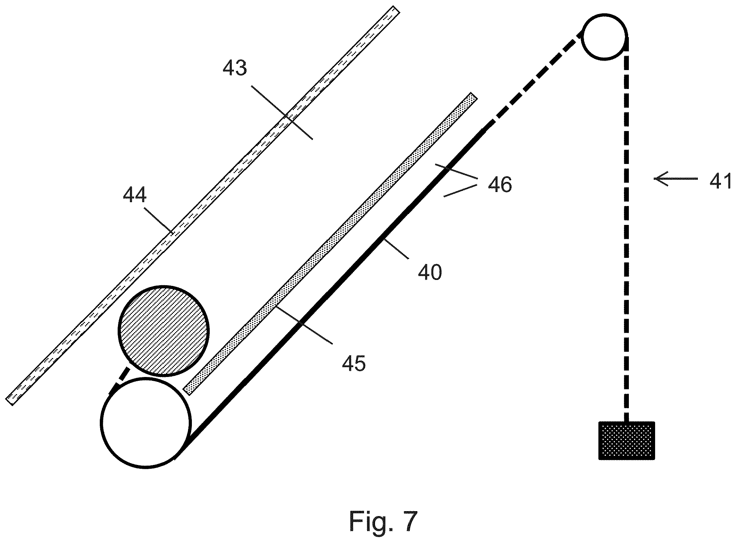

Figur 6 zeigt einen Sonnenkollektor, bei dem eine flexible, absorbierende Folie 40 mittels eines Seilzuges mit Gewicht 41 und einer Umlenkrolle 42 in einen Raumbereich 43 zwischen einer transparenten oder transluzenten Schicht 44 und einer opaken Schicht 45 einfahrbar ist, wobei kein Massenstrom vorhanden sein muss. Figur 7 zeigt den gleichen Sonnenkollektor, bei dem die absorbierende Folie 40 in einen weiteren Raumbereich 46 eingefahren ist, in dem sie vor Bestrahlung mit Sonnenlicht durch die opake Schicht 45 geschützt ist. Auch die Folie 40 kann mit Photovoltaik ausgestattet sein.

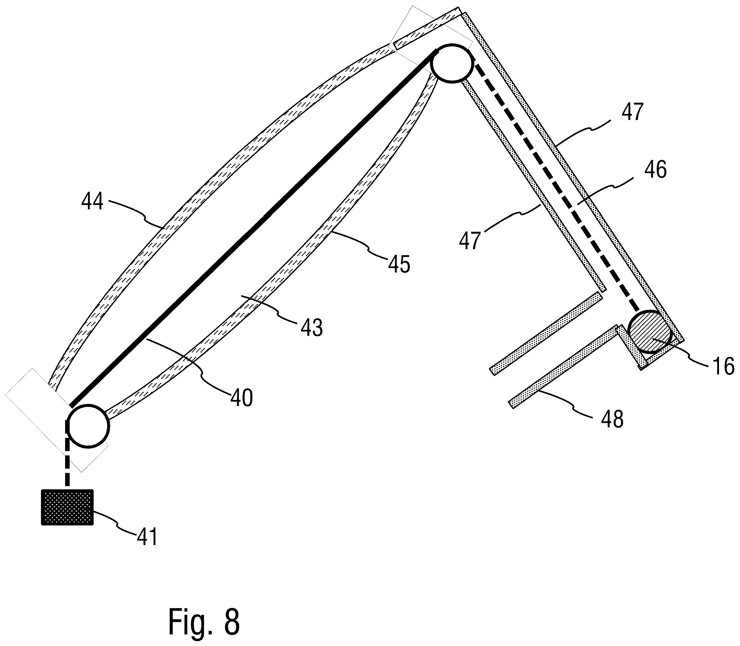

Wie in Figur 8 gezeigt, weist ein Sonnenkollektor zwei Schichten 44 und 45 auf, die in einem horizontalen Abstand voneinander angeordnet sind. Die beiden Schichten 44 und 45 schließen zwischen sich einen Raumbereich 43 ein, der mit einem Wärmeträgerfluid gefüllt ist. Die Schichten sind als Folienbahnen ausgeführt, beispielsweise aus einem Polymermaterial. Zumindest die der Sonne zugewandte Schicht 44 ist transparent oder transluzent ausgeführt.

Daneben weist der Sonnenkollektor zwei Schichten 47 auf, welche einen Raum 46 einschließen. Im Raum 46 ist ein Strömungswiderstand 16 beweglich gelagert, welcher vom strömenden Wärmeträgerfluid in die gezeigte Endstellung bewegt wird. Das Wärmeträgerfluid kann in dieser Stellung durch den Auslass 48 entweichen. Das Wärmeträgerfluid kühlt die Folien- oder Stoffbahn 40, so dass diese nicht durch Überhitzung beschädigt wird und gibt die aufgenommene Wärme als Nutzwärme über den Auslass 48 ab.

Kommt der Strom des Wärmeträgerfluides zum erliegen, bewegt ein Seilzug über das Gewicht 41 die Folien- oder Stoffbahn 40 aus dem Raum 43 hinaus, um eine Überwärmung und Beschädigung zu vermeiden. Dadurch ist der erfindungsgemäße Kollektor stagnationssicher.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Aus-führungsform der Erfindung vorhanden ist. Dies schließt die Anwesenheit weiterer Merkmale nicht aus.

## Patentansprüche

1. Sonnenkollektor zur Wärmeenergiegewinnung aus Sonnenlicht, mit einer beweglichen Absorptionsvorrichtung, die eine dem Sonnenlicht aussetzbare Absorptionsfläche aufweist, und zumindest zwei, im Abstand voneinander angeordneten Materialschichten (1, 2), von denen wenigstens eine transparent oder transluzent ist, und die zwischen sich einen Raumbereich (3) einschließen, in den bzw. aus dem die Absorptionsvorrichtung bewegbar ist, wobei die Absorptionsvorrichtung durch auf ihre Absorptionsfläche fallendes Sonnenlicht erwärmbar ist und von der Absorptionsvorrichtung aufgenommene Wärme an ein Wärmeträgerfluid übertragbar ist, das aus dem Sonnenkollektor abführbar ist, wobei die Absorptionsvorrichtung zumindest eine die Absorptionsfläche aufweisenden flexiblen Folien- oder Stoffbahn (5) enthält und der Raumbereich (3) von dem Wärmeträgerfluid durchströmbar ist, so dass das Wärmeträgerfluid an einer oder beiden Seiten der Folien- oder Stoffbahn (5) entlangströmt, wenn die Folien- oder Stoffbahn (5) in den Raumbereich (3) bewegt ist, **dadurch gekennzeichnet, dass** die Folien- oder Stoffbahn mit einem Strömungswiderstand verbunden ist, an dem das Wärmeträgerfluid eine Kraft erzeugt, die die Folien- oder Stoffbahn in den Raumbereich hineinbewegt, wenn das Wärmeträgerfluid in eine Richtung in Bewegung ist, in der es den Raumbereich durchströmt.

2. Sonnenkollektor nach Anspruch 1, **dadurch gekennzeichnet, dass** die zumindest zwei, im Abstand voneinander angeordneten, plattenförmigen Schichten (1, 2) einen im Bereich zwischen etwa 45° und etwa 90° liegenden Winkel mit der Horizontalen einschließen.

3. Sonnenkollektor nach Anspruch 1 oder 2, **dadurch gekennzeichnet, dass** die Absorptionsfläche vergrößer- und verkleinerbar ist, wobei die Folien- oder Stoffbahn (5) eine größere Absorptionsfläche hat, wenn sie in den Raumbereich (3) hineinbewegt ist und eine kleinere oder keine Absorptionsfläche aufweist, wenn sie aus dem Raumbereich (3) herausbewegt ist.

4. Sonnenkollektor nach Anspruch 3, **dadurch gekennzeichnet, dass** die Schichten (1, 2) zwischen sich einen weiteren Raumbereich (4) einschließen, der die Folien- oder Stoffbahn (5) aufnimmt, wenn sie aus dem einen Raumbereich (3) herausbewegt ist.

5. Sonnenkollektor nach einem der vorhergehenden Ansprüche, **dadurch gekennzeichnet, dass** die Folien- oder Stoffbahn (5) faltbar oder auf- und ausrollbar ist, derart, dass sich die Folien- oder Stoffbahn (5) entfaltet oder ausrollt, wenn sie in den Raumbereich (3) hineinbewegt wird, und dass sie sich zusammenfaltet oder aufrollt, wenn sie aus dem Raumbereich (3) herausbewegt wird und/oder
dass die Folien- oder Stoffbahn (5) zusammengefaltet oder aufgerollt ist, wenn sie sich in dem weiteren Raumbereich (4) befindet.

6. Sonnenkollektor nach einem der vorhergehenden Ansprüche, **dadurch gekennzeichnet, dass** die plattenförmigen Schichten (1, 2) einen im Bereich zwischen 45° und 90° liegenden Winkel mit der Horizontalen einschließen und sich die Folien- oder Stoffbahn (5) unter der Wirkung der Schwerkraft aus dem Raumbereich (3) herausbewegt, wenn das Wärmeträgerfluid ruht.

7. Sonnenkollektor nach einem der vorhergehenden Ansprüche, **dadurch gekennzeichnet, dass** die Folien- oder Stoffbahn (19) mit einer Feder und/oder einem Seilzug (20) mit Gewicht (23) verbunden ist, die bzw. der an der Folien- oder Stoffbahn (19) eine Kraft erzeugt, die die Folien- oder Stoffbahn (19) aus dem Raumbereich herausbewegt, wenn das Wärmeträgerfluid ruht.

8. Sonnenkollektor nach einem der vorhergehenden Ansprüche, **dadurch gekennzeichnet, dass** die plattenförmigen Schichten (9, 10) parallel zueinander angeordnet und durch eine Vielzahl von im Abstand voneinander angeordneten Stegen (11) miteinander verbunden sind, wobei die Stege (11) den zwischen den Schichten (9, 10) eingeschlossenen Raumbereich in Raumbereichsabschnitte unterteilen, und eine der Anzahl der Raumbereichsabschnitte entsprechende Zahl von Folien- oder Stoffbahnen (12) vorhanden ist, von denen jede in einen jeweiligen Raumbereichsabschnitt hinein- und aus ihm heraus bewegbar ist, und wobei jeder Raumbereichsabschnitt von dem Wärmeträgerfluid durchströmbar ist.

9. Sonnenkollektor nach einem der vorhergehenden Ansprüche, **dadurch gekennzeichnet, dass** ein weiterer Raumbereich neben dem zwischen den beiden plattenförmigen Schichten (25, 26) eingeschlossenen einen Raumbereich angeordnet ist, der weitere Raumbereich von einer opaken plattenförmigen Schicht (28) abgedeckt ist, die neben der transparenten oder transluzenten Schicht angeordnet ist, die Folien- oder Stoffbahn (19) zwischen dem einen Raumbereich und dem weiteren Raumbereich, insbesondere über eine Umlenkrolle, hin- und herbewegbar ist und von der opaken Schicht (28) vor Bestrahlung mit Sonnenlicht geschützt ist, wenn sie sich in dem weiteren Raumbereich befindet.

10. Sonnenkollektor nach einem der Ansprüche 1 bis 9, **dadurch gekennzeichnet, dass** der eine Raumbereich einen Bypassabschnitt (27) aufweist, der von dem Strömungswiderstandselement (24) begrenzt wird, wenn die Folien- oder Stoffbahn (19) in den einen Raumbereich hineinbewegt ist und eine Endstellung erreicht hat, wobei das Wärmeträgerfluid den Bypassabschnitt (27) durchströmt, wenn die Folien- oder Stoffbahn (19) in ihrer Endstellung ist.

11. Sonnenkollektor nach einem der Ansprüche 1 bis 3, **dadurch gekennzeichnet, dass** die beiden Schichten punktuell mittels einer Vielzahl von Verbindungselementen miteinander verbunden sind, die Folien- oder Stoffbahn eine der Anzahl der Verbindungselemente entsprechende Zahl von Aussparungen aufweist, wobei wenn die Folien- oder Stoffbahn in dem Raumbereich ausgestreckt angeordnet ist, der Rand jeder Aussparung ein jeweiliges Verbindungselement spannungsfrei umgibt, wobei die Verbindungselemente (29) jeweils insbesondere aus Glaslot bestehen.

12. Sonnenkollektor nach einem der Ansprüche 1 bis 3, **dadurch gekennzeichnet, dass** die beiden Schichten punktuell mittels einer Vielzahl von Verbindungselementen (29) miteinander verbunden sind, die Folien- oder Stoffbahn an zwei sich gegenüberliegenden Rändern eine Vielzahl von senkrecht zu diesen Rändern (31) verlaufende Einschnitte (32) hat, die zwischen sich streifenförmige Zungen bilden, wobei wenn die Folien- oder Stoffbahn (30) ausgestreckt im Raumbereich angeordnet ist, an jedem Verbindungselement (29) eine oder mehrere der Zungen umgebogen anliegen.

13. Sonnenkollektor nach einem der vorhergehenden Ansprüche, **dadurch gekennzeichnet, dass** das Wärmeträgerfluid nach dem Verlassen des einen Raumbereichs unter einem Trocknungsgitter (18) vorbei geleitet wird, auf das zu trocknendes, feuchtes Gut aufbringbar ist.

14. Sonnenkollektor nach einem der vorhergehenden Ansprüche, **dadurch gekennzeichnet, dass** die Folien- oder Stoffbahn mit einer Einrichtung für Photovoltaik ausgestattet ist.

15. Verwendung eines Sonnenkollektors nach einem der Ansprüche 1 bis 14 als Gebäudefassadenelement und/oder zum Erwärmen von Trocknungsluft, die zum Trocknen von feuchtem Gut, insbesondere Agrarprodukten, verwendet wird.

## Claims

1. Solar collector for obtaining thermal energy from sunlight, comprising a movable absorption device which has an absorption surface that can be exposed to sunlight and at least two material layers (1, 2), which are arranged at a distance from one another, at least one of which is transparent or translucent and which enclose a space region (3) between them, into which or from which space region the absorption device can be moved, wherein the absorption device can be heated by sunlight falling on its absorption surface and the heat absorbed by the absorption device can be transferred to a heat transfer fluid that can be removed from the solar collector, wherein the absorption device contains at least one flexible film web or fabric web (5) including the absorption surface and the heat transfer fluid can flow through the space region (3) in such a way that the heat transfer fluid flows along one or both sides of the film web or fabric web (5) when the film web or fabric web (5) is moved into the space region (3), **characterized in that** the film web or fabric web is connected to a flow resistance, at which the heat transfer fluid generates a force which moves the film web or fabric web into the space region when the heat transfer fluid is moving in a direction in which it flows through the space region.

2. Solar collector according to claim 1, **characterized in that** the at least two plate-shaped layers (1, 2) arranged at a distance from one another enclose an angle with the horizontal that ranges between about 45° and about 90°.

3. Solar collector according to claim 1 or 2, **characterized in that** the absorption surface can be enlarged and reduced in size, the film web or fabric web (5) having a larger absorption surface when it is moved into the space region (3) and having a smaller or no absorption surface when it is moved out of the space region (3).

4. Solar collector according to claim 3, **characterized in that** the layers (1, 2) enclose between them a further space region (4) which receives the film web or fabric web (5) when it is moved out of one space region (3).

5. Solar collector according to any of the preceding claims, **characterized in that** the film web or fabric web (5) is foldable or can be rolled up and rolled out in such a way that the film web or fabric web (5) unfolds or rolls out when it is moved into the space region (3), and that it folds up or rolls up when it is moved out of the space region (3), and/or
that the film web or fabric web (5) is folded up or rolled up when it is located in the further space region (4).

6. Solar collector according to any of the preceding claims, **characterized in that** the plate-shaped layers (1, 2) enclose an angle with the horizontal that ranges between 45° and 90° and the film web or fabric web (5) moves out of the space region (3) under the action of gravity when the heat transfer fluid is at rest.

7. Solar collector according to any of the preceding claims, **characterized in that** the film web or fabric web (19) is connected to a spring and/or a cable (20) with weight (23), which generates, on the film web or fabric web (19), a force that moves the film web or fabric web (19) out of the space region when the heat transfer fluid is at rest.

8. Solar collector according to any of the preceding claims, **characterized in that** the plate-shaped layers (9, 10) are arranged parallel to each other and are interconnected by a plurality of bridges (11) that are arranged at a distance from one another, wherein the bridges (11) divide the space region enclosed between the layers (9, 10) into space region sections, and a number of film webs or fabric webs (12) corresponding to the number of space region sections is provided, each of which is movable into and out of a respective space region section, and wherein the heat transfer fluid can flow through each space region section.

9. Solar collector according to any of the preceding claims, **characterized in that** a further space region is arranged next to one space region enclosed between the two plate-shaped layers (25, 26), the further space region is covered by an opaque plate-shaped layer (28), which is arranged next to the transparent or translucent layer, the film web or fabric web (19) can be moved back and forth between the one space region and the further space region, in particular via a deflection roller, and is protected against irradiation with sunlight by the opaque layer (28) when it is located in the further space region.

10. Solar collector according to any of claims 1 to 9, **characterized in that** one space region has a bypass section (27), which is bounded by the flow resistance element (24) when the film web or fabric web (19) is moved into one space region and has reached an end position, wherein the heat transfer fluid flows through the bypass section (27) when the film web or fabric web (19) is in its end position.

11. Solar collector according to any of claims 1 to 3, **characterized in that** the two layers are connected to one another selectively by means of a plurality of connecting elements, the film web or fabric web has a number of recesses corresponding to the number of connecting elements, wherein, when the film web or fabric web is arranged stretched out in the space region, the edge of each recess surrounds a respective connecting element without tension, wherein the connecting elements (29) each consist in particular of glass solder.

12. Solar collector according to any of claims 1 to 3, **characterized in that** the two layers are connected to one another selectively by means of a plurality of connecting elements (29), the film web or fabric web has, at two opposite edges, a plurality of incisions (32) which run perpendicularly to these edges (11) and which form strip-shaped tongues between them, wherein, when the film web or fabric web (30) is arranged stretched out in the space region, one or more of the tongues abut in bent-over fashion against each connecting element (29).

13. Solar collector according to any of the preceding claims, **characterized in that**, after leaving the one space region, the heat transfer fluid is passed under a drying grid (18) onto which moist material to be dried can be applied.

14. Solar collector according to any of the preceding claims, **characterized in that** the film web or fabric web is equipped with an apparatus for photovoltaic.

15. Use of a solar collector according to any of claims 1 to 14 as a building façade element and/or for heating drying air used for drying moist material, in particular agricultural products.

## Revendications

1. Collecteur solaire pour la récupération d'énergie thermique à partir de la lumière solaire, comportant un dispositif d'absorption mobile qui présente une surface d'absorption apte à être exposée à la lumière solaire, et au moins deux couches de matériau (1, 2) agencées à distance l'une de l'autre dont l'une au moins est transparente ou translucide et qui enferment entre elles un compartiment (3) dans lequel ou hors duquel le dispositif d'absorption est mobile, le dispositif d'absorption pouvant être échauffé par la lumière solaire incidente sur sa surface d'absorption, et la chaleur absorbée par le dispositif d'absorption étant transférable à un fluide caloporteur apte à être évacué hors du collecteur solaire, le dispositif d'absorption comprenant au moins une bande de feuille ou de tissu (5) flexible présentant la surface d'absorption, et le compartiment (3) pouvant être traversé par le fluide caloporteur, de sorte que le fluide caloporteur s'écoule le long d'une face ou des deux faces de la bande de feuille ou de tissu (5) lorsque la bande de feuille ou de tissu (5) est déplacée jusque dans le compartiment (3),
**caractérisé en ce que**
la bande de feuille ou de tissu est reliée à une résistance à l'écoulement au niveau de laquelle le fluide caloporteur génère une force qui déplace la bande de feuille ou de tissu jusque dans le compartiment lorsque le fluide caloporteur est en mouvement dans une direction dans laquelle il traverse le compartiment.

2. Collecteur solaire selon la revendication 1,
**caractérisé en ce que**
lesdites au moins deux couches (1, 2) en forme de plaque agencées à distance l'une de l'autre définissent un angle dans la plage entre environ 45° et environ 90° avec l'horizontale.

3. Collecteur solaire selon la revendication 1 ou 2,
**caractérisé en ce que**
la surface d'absorption peut être agrandie ou réduite, la bande de feuille ou de tissu (5) ayant une surface d'absorption plus grande lorsqu'elle est déplacée jusque dans le compartiment, et ayant une surface d'absorption plus petite ou n'ayant pas de surface d'absorption lorsqu'elle est déplacée hors du compartiment (3).

4. Collecteur solaire selon la revendication 3,
**caractérisé en ce que**
les couches (1, 2) enferment entre elles un autre compartiment (4) qui reçoit la bande de feuille ou de tissu (5) lorsqu'elle est déplacée hors dudit compartiment (3).

5. Collecteur solaire selon l'une des revendications précédentes,
**caractérisé en ce que**
la bande de feuille ou de tissu (5) et pliable ou enroulable ou déroulable, de telle sorte que la bande de feuille ou de tissu (5) se déploie ou se déroule lorsqu'elle est déplacée jusque dans le compartiment (3) et qu'elle se replie ou s'enroule lorsqu'elle est déplacée hors du compartiment (3), et/ou **en ce que**
la bande de feuille ou de tissu (5) est repliée ou enroulée lorsqu'elle se trouve dans l'autre compartiment (4).

6. Collecteur solaire selon l'une des revendications précédentes,
**caractérisé en ce que**
les couches en forme de plaque (1, 2) définissent un angle dans la plage entre 45° et 90° avec l'horizontale et la bande de feuille ou de tissu (5) se déplace hors du compartiment (3) sous l'effet de la pesanteur lorsque le fluide caloporteur est au repos.

7. Collecteur solaire selon l'une des revendications précédentes,
**caractérisé en ce que**
la bande de feuille ou de tissu (19) est reliée à un ressort et/ou à une commande à câble (20) ayant un poids (23), qui génère une force sur la bande de feuille ou de tissu (19) qui déplace la bande de feuille ou de tissu (19) hors du compartiment lorsque le fluide caloporteur est au repos.

8. Collecteur solaire selon l'une des revendications précédentes,
**caractérisé en ce que**
les couches (9, 10) en forme de plaque sont agencées parallèlement l'une à l'autre et sont reliées l'une à l'autre par une multitude de barrettes (11) agencées à distance les unes des autres, les barrettes (11) subdivisant le compartiment enfermé entre les couches (9, 10) en portions de compartiment, et il est prévu un nombre de bandes de feuille ou de tissu (12) qui correspond au nombre de portions de compartiment, bandes dont chacune peut être déplacée jusque dans ou hors d'une portion de compartiment respective, chaque portion de compartiment pouvant être traversée par le fluide caloporteur.

9. Collecteur solaire selon l'une des revendications précédentes,
**caractérisé en ce que**
un autre compartiment est agencé à côté dudit compartiment enfermé entre les deux couches (25, 26) en forme de plaque,
ledit autre compartiment est recouvert par une couche opaque (28) en forme de plaque qui est agencée à côté de la couche transparente ou translucide,
la bande de feuille ou de tissu (19) est mobile en va-et-vient entre ledit compartiment et ledit autre compartiment, en particulier par une poulie de renvoi, et est protégée contre l'irradiation de la lumière solaire par la couche opaque (28), lorsqu'elle se trouve dans l'autre compartiment.

10. Collecteur solaire selon l'une des revendications 1 à 9,
**caractérisé en ce que**
ledit compartiment comprend une portion formant by-pass (27) qui est délimitée par l'élément de résistance à l'écoulement (24) lorsque la bande de feuille ou de tissu (19) est déplacée jusque dans ledit compartiment et qu'elle atteint une position finale, le fluide caloporteur traversant la portion formant by-pass (27) lorsque la bande de feuille ou de tissu (19) est dans sa position finale.

11. Collecteur solaire selon l'une des revendications 1 à 3,
**caractérisé en ce que**
les deux couches sont reliées ponctuellement l'une à l'autre par une multitude d'éléments de liaison,
la bande de feuille ou de tissu comprend un nombre d'échancrures qui correspond au nombre des éléments de liaison, et
lorsque la bande de feuille ou de tissu est agencée de façon étendue dans le compartiment, le bord de chaque échancrure entoure sans contrainte un élément de liaison respectif, les éléments de liaison (29) étant constitués chacun en particulier en verre de brasage.

12. Collecteur solaire selon l'une des revendications 1 à 3,
**caractérisé en ce que**
les deux couches sont reliées ponctuellement l'une à l'autre par une multitude d'éléments de liaison (29),
sur deux bords opposés, la bande de feuille ou de tissu comprend une multitude d'entailles (32) s'étendant perpendiculairement à ces bords (31) et formant des languettes en forme de ruban, et
lorsque la bande de feuille ou de tissu (30) est agencée de façon étendue dans le compartiment, une ou plusieurs languettes s'appuie(nt) en étant repliée(s) contre chaque élément de liaison (29).

13. Collecteur solaire selon l'une des revendications précédentes,
**caractérisé en ce que**
après avoir quitté ledit compartiment, le fluide caloporteur est mené au-dessous d'une grille de séchage (18) en passant le long de celle-ci, qui permet de poser une matière humide à sécher.

14. Collecteur solaire selon l'une des revendications précédentes,
**caractérisé en ce que**
la bande de feuille ou de tissu est munie d'un système pour installation photovoltaïque.

15. Utilisation d'un collecteur solaire selon l'une des revendications 1 à 14 à titre d'élément de façade de bâtiment et/ou pour chauffer de l'air de séchage qui est utilisé pour sécher une matière humide, en particulier des produits agricoles.
